# EUROPEAN PATENT SPECIFICATION

(11) **EP 1 293 284 B1**
(45) Date of publication and mention of the grant of the patent: **26.04.2006**
(21) Application number: 02396141.0
(22) Date of filing: 13.09.2002
(51) Int. Cl.: B23K 9/32, B23K 37/00

(54) **Apparatus for making weld seams**
Vorrichtung zum Erstellen von Schweissnähten
Appareil de formation d'un cordon de soudure

(30) Priority: 17.09.2001 FI 20011826
(43) Date of publication of application: 19.03.2003
(73) Proprietor: Havator Oy, 95400 Tornio (FI)
(72) Inventor: Hanhirova, Erkki, 95400 Tornio (FI)
(74) Representative: Helino, Timo Kalervo

(56) References cited:
- US-A- 3 452 764
- US-A- 4 825 598
- US-A- 5 811 055
- PATENT ABSTRACTS OF JAPAN vol. 1998, no. 11, 30 September 1998 (1998-09-30) -& JP 10 151568 A (RITSUCHI HIRUZU KK), 9 June 1998 (1998-06-09)
- PATENT ABSTRACTS OF JAPAN vol. 2000, no. 23, 10 February 2001 (2001-02-10) -& JP 2001 162377 A (HAZAMA GUMI LTD), 19 June 2001 (2001-06-19)

## Description

The present invention relates to an apparatus for making weld seams as defined in the preamble of claim 1.

The welding apparatus of the invention has been developed primarily for the welding of large, round or cylindrical objects. For example, in offshore oil drilling platforms and oil rigs, the diameter of the cylindrical objects to be welded are of the order of 20 - 50 meters. The objects are generally constructed in a horizontal position, which means that their circular joints to be welded start from the ground surface upwards, having first an outward curvature and then an inward curvature, extending at their topmost verge to a height of 50 meters from the ground surface.

Traditionally, circular joints extending to a large height are welded by building around the entire joint a ring-like scaffolding covered with protective canvas or metal cladding. This allows the welding to be carried out in relatively stable conditions even in bad weather. The problem with prior-art solutions is primarily the fact that the methods used are slow and therefore involve high expenses in respect of both work and instruments. Additional problems are encountered in the supply of welding gases within the scaf-folding structure and in the task of passing and conveying the hoses and electric cables to the required point. Further problems result from the necessity of maintaining optimal conditions regarding temperature, moisture and windiness in the relatively large ring-like space surrounding the entire object being worked on.

Some kind of prior art is disclosed also in JP 10151568. In this document a working booth is fixed on an elevating unit to provide a shield device capable of carrying out blast processing without using a curing net, closely adhering it on a surface to be processed regardless of its shape, making itself into closed structure, preventing leakage of dust and decreasing noise and its booth in eliminating coating films, deposits or blots on surfaces of elevated bridges, buildings or the like.

The object of the invention is to eliminate the above-mentioned drawbacks. A specific object of the invention is to disclose a new type of apparatus that can be used in flexible and diversified ways in making vertically curved weld seams.

As for the features of the invention, reference is made to claim 1.

The apparatus of the invention for making large vertically curved weld seams comprises a working cage attached to the boom system of a hoist, such as e.g. a personal hoist, said working cage containing a welder's work place provided with welding equipment, the working cage having a substantially open front side facing against the object to be welded. The edge or circumference of the open front wall is provided with a circumferential sealing fillet, which in the welding situation is pressed against the object to be welded. According to the invention, the apparatus comprises a bellows structure placed between the edge area of the open front wall and the circumferential sealing fillet and arranged to extend between the working cage and the object to be welded and to enclose and protect the space between them regardless of the relative positions of the front wall and the object to be welded with respect to each other. The hoses for oxygen, acetylene and protective gas needed in the working cage as well as possible cables for electric welding are permanently installed on the boom system supporting the working cage. Thus, the working space need not be encumbered with any long coils of hose or cable, which would have to be dragged along and controlled as the work progresses and the apparatus is being moved. Thus, according to the basic inventive idea, the welder's working cage can be moved, using a suitable hoist, to a desired place, where, by means of the bellows structure, a protected working space for the welder is formed between the working cage and the object to be welded. The working cage may be always kept in a standard position, e.g. vertically in a given position, regardless of the curvature or turning of the surface of the object to be welded.

The bellows structure preferably comprises a number of rigid supporting ribs, i.e. support structures, and, placed between these or supported by these, protective fabrics or corresponding shrouds, coverings or equivalent, capable of being folded and unfolded and of withstanding the prevailing conditions.

The circumferential sealing fillet is preferably placed on the outer surface of the outermost supporting rib. The sealing fillet may consist of e.g. a rubber flange or some other structure having a suitable degree of flexibility and elasticity, which, when pressed against the object to be welded, forms a sufficiently tight contact, preventing the entry of wind and rain into the working space.

In an embodiment of the invention, the supporting ribs are pivotally connected by their lower ends to the lower edge of the open front wall of the working cage. Thus, only the upper part of the bellows structure will significantly expand outwards while the front edge of the bellows may turn as much as 90° against a nearly horizontal surface.

Another possibility is to use a bellows structure that is flexible, i.e. compressible and expandable throughout its circumference so that the bellows-type extensions of the edge areas of the front wall expand and contract freely, covering and delimiting the space between the working cage and the surface under treatment regardless of the direction of curvature of the surface.

The external surfaces of the working cage, except for the open front wall, are preferably arranged to be substantially wind and rain resistant. Some of the external surfaces may be implemented as windows made of e.g. acrylic plastic. In the other surfaces, it is possible to use either light fabric structures or rigid sheets, e.g. aluminum sheets, or even insulated sheet structures.

As a hoist in connection with the apparatus of the invention, it is possible to use various folding-boom hoisting devices supported by a vehicle chassis or mounted on a separate frame, or various vehicle-mounted hoists provided with a telescoping boom.

In addition, the working cage can be provided with heating, ventilation and/or air conditioning equipment to allow optimization of working conditions, considering both the worker's needs and the welding conditions.

The apparatus of the invention has significant advantages as compared with prior art. The apparatus completely eliminates the need for building fixed protective scaffolding. Therefore, welding can be started immediately, whereas traditionally most of the working time has been consumed in constructing, moving and pulling down scaffolding and protective structures. When work is in progress, the cage remains in a constant position all the time and only the space between the cage and the object being worked on changes with the curvature of the object. Thus, it is possible to carry a perfect selection of materials and tools on ordinary shelves and racks in the cage. Likewise, the worker can have sturdy and secure seats or corresponding supports, from which he can reach far enough to carry out the various tasks. Moreover, adjustments for reaching good working conditions and the maintenance of such conditions are considerably easier, which allows easy use of protective gas and a high quality of the welding result.

In the following, the invention will be described in detail with reference to the attached drawings, wherein
Fig. 1 presents a diagrammatic view of a working cage according to the invention, partially sectioned,
Fig. 2 presents a diagrammatic illustration of the operation of a hoist with a working cage in the case of a large-diameter object to be worked on,
Fig. 3 illustrates the use of a working cage in a nearly perpendicular working position,
Fig. 4 illustrates the use of a working cage when an oblique surface is being welded, and
Fig. 5 illustrates the use of a working cage in the case of a nearly horizontal surface to be welded.

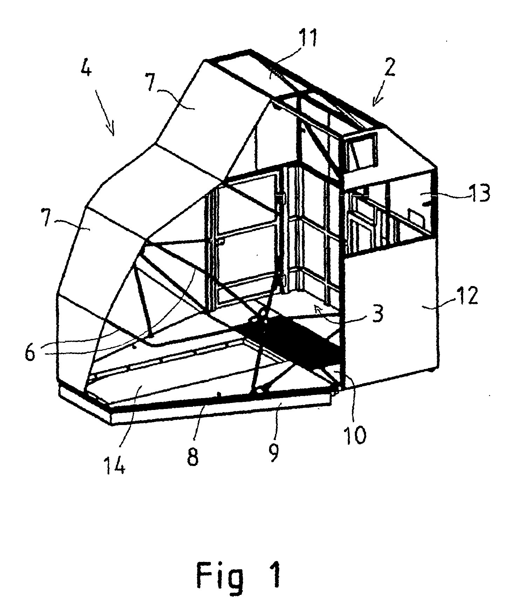

Fig. 1 presents a partially sectioned working cage 2 according to the invention. It consists of a rigid framework comprising a floor 10, a ceiling 11, side walls 12 and a back wall 13 and a substantially open front wall 3. Attached to the front wall is a bellows structure 4 consisting of four supporting ribs 6, which are pivotally and swivellably connected to the lower edge of the front wall. The supporting ribs are connected to each other by a protective fabric 7 that covers the areas between the supporting ribs so that, when the ribs are turned to the forward position, a tent-like space protected against wind and rain is formed under the supporting ribs.

The protective fabric 7 is fastened to the front edge of the ceiling 11 and to the front edges of the side walls 12 and by its outer edge over the entire length of the supporting rib 8. In addition, the outer edge of the outermost supporting rib 8 is provided with a sealing fillet 9, a flexible and relatively stiff flange or equivalent, made of e.g. rubber or a suitable plastic material. The surface delimited by the outermost supporting rib 8 is partially closed and it comprises a working opening 14, through which the object to be welded can be accessed and the welding performed.

The working cage is provided with various devices and tools known in themselves that are needed in the work but omitted from the drawing for the sake of clarity.

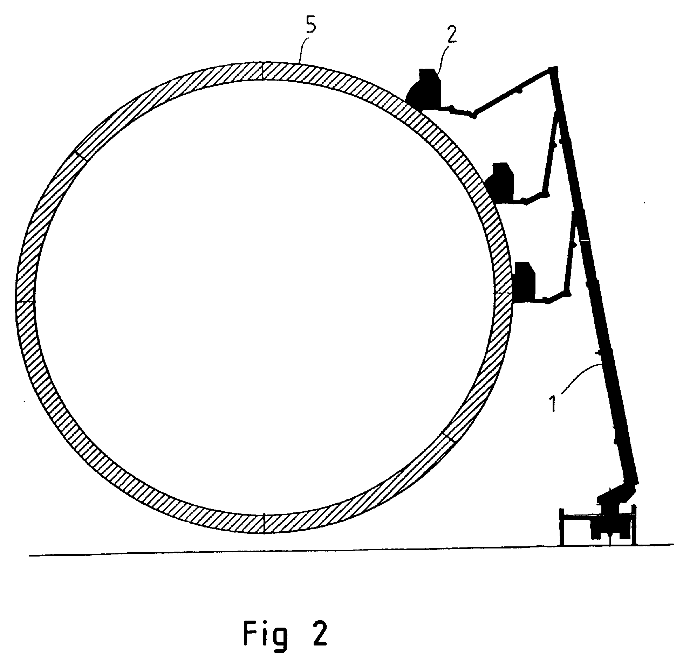

Fig. 2 presents a diagrammatic illustration of the use of a working cage 2 as presented in Fig. 1 when a large cylindrical object 5 is being welded. The cage 2 is mounted on a boom system 1 extensible to a sufficient height, by means of which the cage is moved along the surface to be welded according to the progress of the welding work. With this cage solution, work may be started roughly from the three o'clock or four o'clock position, and the cage can be raised until reaching the top of the object. The object 5 is treated in a corresponding manner from the other side, whereupon the welding of the lower part can be carried out in more traditional ways using small scaffolds and partly from the ground.

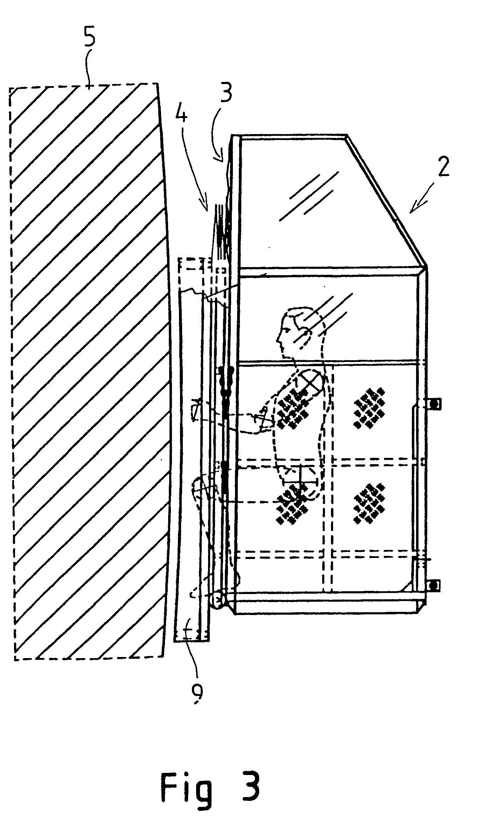

Figures 3 - 5 illustrate the use of the cage 2 at different working angles. In Fig. 3, a welder is welding an object 5 whose surface is in a substantially vertical position. In this situation, the bellows structure 4 is flat against the cage 2 while the sealing fillet 9 is pressed against the surface of the object 5.

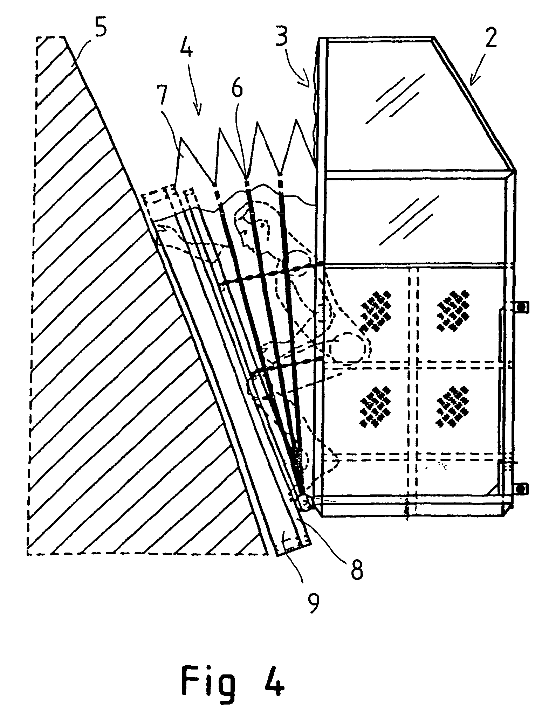

As illustrated by Fig. 4, as the work progresses in the upward direction, the surface of the object 5 starts to bend, so the bellows structure also begins to distend, forming between the object 5 and the upright remaining cage a tent that provides protection against wind and moisture. It is possible to move the cage substantially continuously with the progress of the work along the surface of the object 5, but in practice it has proved to be preferable to move the cage in a stepwise manner according to the progress of the work.

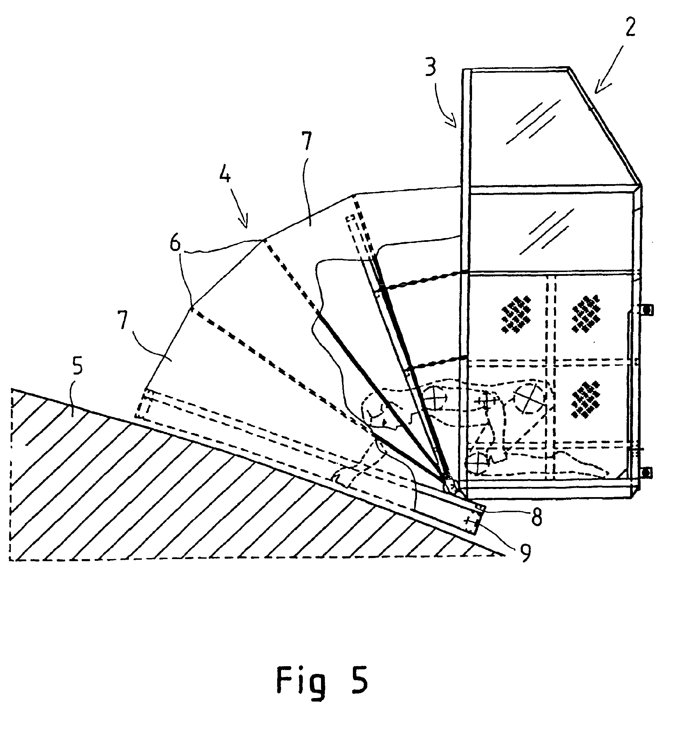

Fig. 5 illustrates a stage of work where the surface of the object 5 being worked on is already nearly horizontal. In this situation, the bellows structure is almost completely stretched out while it still forms a tight protection between the cage and the object. As can be seen from figures 3 - 5, the welder's working position changes with the progress of the work. Therefore, the cage is provided with suitable spaces and supports to allow a good and safe working position in all situations.

In the foregoing, the invention has been described by way of example while different embodiments of the invention are possible within the scope defined in the claims.

## Claims

1. Apparatus for making vertically curved weld seams, said apparatus comprising a working cage (2) mounted on the boom system (1) of a hoist, said cage containing a welder's work place provided with welding equipment, the front wall (3) of the cage placed against the object to be welded being substantially open and provided with a circumferential sealing fillet (9), which in the welding situation is pressed against the object (5) to be welded, wherein the apparatus comprises a bellows structure (4) placed between the edge area of the open front wall and the circumferential sealing fillet (9), **characterized in that** the bellows structure (4) is arranged to extend between the working cage and the object (5) to be welded and to enclose and protect the space between them regardless of the relative positions of the front wall and the object to be welded with respect to each other, and that the working cage is provided with cables for electric welding and the hoses for oxygen, acetylene and protective gas needed in the working cage are permanently installed on the boom system supporting the working cage.

2. Apparatus according to claim 1, **characterized in that** the bellows structure (4) comprises a plurality of rigid supporting ribs (6) and protective fabrics (7) between them.

3. Apparatus according to claim 2, **characterized in that** the circumferential sealing fillet (9) is attached to the outer surface of the outermost supporting rib (8).

4. Apparatus according to claim 2, **characterized in that** the supporting ribs (6,8) are pivotally connected by their lower ends to the lower edge of the open front wall of the working cage (2).

5. Apparatus according to claim 1, **characterized in that**, except for the open front wall, the outer surfaces of the working cage are arranged to be substantially windproof and rainproof.

6. Apparatus according to claim 1, **characterized in that** the hoist used is a folding-boom truck-mounted hoisting device or a vehicle-mounted hoist provided with a telescoping boom.

7. Apparatus according to claim 1, **characterized in that** the working cage is provided with a heater, ventilation and/or an air conditioning system for the adjustment of working conditions.

## Patentansprüche

1. Vorrichtung zum Erzeugen vertikal gekrümmter Schweißnähte, welche Vorrichtung einen Arbeitskäfig (2) aufweist, der an dem Auslegersystem (1) eines Hebezeugs befestigt ist, welcher Käfig den Arbeitsplatz eines Schweißers enthält, der mit einer Schweißausrüstung versehen ist, wobei die Vorderwand (3) des Käfigs, die dem zu schweißenden Gegenstand zugewandt ist, im Wesentlichen offen und mit einer in Umfangsrichtung dichtenden Ausrundung (9) versehen ist, die in der Schweißsituation gegen den zu schweißenden Gegenstand (5) gedrückt wird, wobei die Vorrichtung eine Faltenbalgstruktur (4) hat, die zwischen dem Kantenbereich der offenen Vorderwand und der in Umfangsrichtung dichtenden Ausrundung (9) angeordnet ist, **dadurch gekennzeichnet, dass** die Faltenbalgstruktur (4) so angeordnet ist, dass sie sich zwischen den Arbeitskäfig und den zu schweißenden Gegenstand (5) erstreckt und den Raum zwischen diesen umschließt und schützt ungeachtet der relativen Positionen der Vorderwand und des zu schweißenden Gegenstands zueinander, und dass der Arbeitskäfig mit Kabeln zum elektrischen Schweißen versehen ist und die Schläuche für Sauerstoff, Acetylen und Schutzgas, die in dem Arbeitskäfig benötigt werden, permanent an dem den Arbeitskäfig tragenden Auslegersystem installiert sind.

2. Vorrichtung nach Anspruch 1, **dadurch gekennzeichnet, dass** die Faltenbalgstruktur (4) mehrere starre Stützrippen (6) und ein schützendes Gewebe (7) zwischen diesen aufweist.

3. Vorrichtung nach Anspruch 2, **dadurch gekennzeichnet, dass** die in Umfangsrichtung dichtende Ausrundung (9) an der äußeren Oberfläche der äußersten Stützrippe (8) angebracht ist.

4. Vorrichtung nach Anspruch 2, **dadurch gekennzeichnet, dass** die Stützrippen (6, 8) mit ihren unteren Enden drehbar mit der unteren Kante der offenen Vorderwand des Arbeitskäfigs (2) verbunden sind.

5. Vorrichtung nach Anspruch 1, **dadurch gekennzeichnet, dass** mit Ausnahme der offenen Vorderwand die äußeren Oberflächen des Arbeitskäfigs im Wesentlichen winddicht und regendicht ausgebildet sind.

6. Vorrichtung nach Anspruch 1, **dadurch gekennzeichnet, dass** das verwendete Hebezeug eine auf einem Fahrgestell befestigte Hubvorrichtung mit einem Faltausleger oder ein auf einem Fahrzeug befestigtes Hebezeug ist, das mit einem Teleskopausleger versehen ist.

7. Vorrichtung nach Anspruch 1, **dadurch gekennzeichnet, dass** der Arbeitskäfig mit einem Heiz-, Lüftungs- und/oder Klimatisierungssystem für die Einstellung von Arbeitsbedingungen versehen ist.

## Revendications

1. Appareil de formation de cordons de soudure courbés verticalement, ledit appareil comprenant une cabine de travail (2) montée sur le système de flèche (1) d'un appareil de levage, ladite cabine contenant un poste de travail pour un soudeur muni d'un équipement de soudage, la paroi avant (3) de la cabine placée contre l'objet à souder étant sensiblement ouverte et munie d'un raccordement de scellement circonférentiel (9) qui, dans la situation de soudage, est pressé contre l'objet (5) à souder, dans lequel l'appareil comprend une structure de soufflets (4) placée entre le bord de la paroi avant ouverte et le raccordement de scellement circonférentiel (9), **caractérisé en ce que** la structure de soufflets (4) est disposée de façon à s'étendre entre la cabine de travail et l'objet (5) à souder et à entourer et à protéger l'espace entre eux indépendamment des positions relatives de la paroi avant et de l'objet à souder l'un par rapport à l'autre, et **en ce que** la cabine de travail est munie de câbles pour un soudage électrique et les flexibles d'injection pour l'oxygène, l'acétylène et les gaz de protection nécessaires dans la cabine sont installés en permanence sur le système de flèche supportant la cabine de travail.

2. Appareil selon la revendication 1, **caractérisé en ce que** la structure de soufflets (4) comprend une pluralité de nervures de support rigides (6) et de tissus de protection (7) entre celles-ci.

3. Appareil selon la revendication 2, **caractérisé en ce que** le raccordement de scellement circonférentiel (9) est attaché à la surface externe de la nervure de support la plus extérieure (8).

4. Appareil selon la revendication 2, **caractérisé en ce que** les nervures de support (6, 8) sont connectées de façon pivotante par leurs extrémités inférieures au bord inférieur de la paroi avant ouverte de la cabine de travail (2).

5. Appareil selon la revendication 1, **caractérisé en ce que**, à l'exception de la paroi avant ouverte, les surfaces externes de la cabine de travail sont agencées de façon à être sensiblement à l'épreuve du vent et à l'épreuve de la pluie.

6. Appareil selon la revendication 1, **caractérisé en ce que** l'appareil de levage utilisé est un dispositif de levage à flèche pliante monté sur camion ou un appareil de levage monté sur véhicule muni d'une flèche télescopique.

7. Appareil selon la revendication 1, **caractérisé en ce que** la cabine de travail est munie d'un dispositif de chauffage, d'un dispositif de ventilation et/ou d'un système d'air conditionné pour le réglage des conditions de travail.
